# EUROPÄISCHE PATENTSCHRIFT

(11) **EP 2 763 886 B1**
(45) Veröffentlichungstag und Bekanntmachung des Hinweises auf die Patenterteilung: **21.10.2015**
(21) Anmeldenummer: 12738402.2
(22) Anmeldetag: 18.07.2012
(51) Int. Cl.: B62D 35/00

(54) **HECKSPOILEREINRICHTUNG FÜR EIN FAHRZEUG**
REAR SPOILER DEVICE FOR A VEHICLE
SYSTÈME DE SPOILER ARRIÈRE POUR VÉHICULE

(30) Priorität: 04.10.2011 DE 102011114871
(43) Veröffentlichungstag der Anmeldung: 13.08.2014
(73) Patentinhaber: WABCO GmbH, 30453 Hannover (DE)
(72) Erfinder: BERNHARDT, Dirk, 31515 Wunstorf (DE); DIECKMANN, Thomas, 30982 Pattensen (DE); DREYER, Werner, 30826 Garbsen (DE); STUMBERG, Ingo, 30625 Hannover (DE); WIEHEN, Christian, 30938 Burgwedel (DE); ZIELKE, Frank, 30890 Barsinghausen (DE)
(74) Vertreter: Lauerwald, Jörg
(86) Internationale Anmeldenummer: PCT/EP2012/003018
(87) Internationale Veröffentlichungsnummer: WO 2013/050090

(56) Entgegenhaltungen:
- WO-A2-2008/024386
- US-B1- 6 257 654
- US-B1- 6 485 087
- US-B1- 8 025 329

## Beschreibung

Die Erfindung betrifft eine Heckspoilereinrichtung für ein Fahrzeug, eine Scharniereinrichtung und ein entsprechendes Fahrzeug.

Heckspoiler dienen der Verbesserung der Aerodynamik des Fahrzeugs und können den Kraftstoffverbrauch entsprechend senken. Hierbei sind unterschiedliche Ansätze zur Ausbildung derartiger Heckspoiler bekannt. Die US 4,688,841 zeigt eine sich selbst aufblasende Struktur aus Folie oder Textil. Die US 5,375,903 und WO 2010/053409 zeigen ähnliche Ansätze. Die DE 20 2009 014 476 U1, DE 20 2009 014 510 U1 und DE 20 2009 015 009 U1 zeigen Ausbildungen von Heckspoilern aus festen Materialien, bei denen die Spoilerelemente verschiebbar oder schwenkbar angeordnet sind, um ein ungestörtes Öffnen der Tür zu ermöglichen.

Die DE 102 28 658 A1 zeigt verschiedene Klapplösungen, bei denen um ein Scharnier schwenkbare Planflächen im Fahrbereich eine aerodynamische Optimierung der Fahrzeugform ermöglichen sollen. Die EP 1 870 321 B1 beschreibt eine aufblasbare Ausbildung.

Die DE 10 2008 036 888 A1 zeigt verschiedene Ausbildungen von Heckspoilern und deren Anbindungen am Fahrzeug. Hierbei ist unter anderem vorgesehen, zwischen der Hecktür und dem Luftleitelement einen Mitnehmer anzubringen, der für eine weitgehend ausgeschwenkte Stellung der Tür ausgehängt werden kann. Statt eines derartigen Mitnehmers ist auch die Verwendung eines flexiblen Mitnehmers mit einem Hohlraum beschrieben. Beim Ausschwenken der Heckklappe nach außen um ihre vertikale Schwenkachse wird das Luftleitelement zunächst mitgeschwenkt, bis es an die Außenfläche der Seitenwand gelangt. Beim nachfolgenden Aufschwenken der Heckklappe wird das flexible Mitnehmerelement entsprechend gestaucht.

US 6,485,087 B1 offenbart eine Vorrichtung zur Verringerung des Luftwiderstandes zur Verwendung an einem Fahrzeug gemäss dem Oberbegriff von Anspruch 1, wobei diese Vorrichtung aus rechteckig geformten Platten mit einer Vorderkante besteht, die gelenkig mit Türen des Fahrzeugs verbunden ist. Wenn die Tür geöffnet wird, kann die rechteckig geformte Platte zwischen der Tür und der Seite des Fahrzeugs zu einer Position neben der Seite des Fahrzeugs bewegt werden. Wenn die Tür wieder aus der geöffneten Position in eine geschlossene Position bewegt wird, wird die Platte in ihre ursprüngliche Position zurückgeführt. Die Vorrichtung zur Verringerung des Luftwiderstandes besteht aus zwei Seitenplatten und zwei Dachplatten.

Derartige Ausbildungen sind jedoch im Allgemeinen recht aufwendig. So sind im Allgemeinen komplexe Gelenk- oder Scharnierausbildungen und Anbindungen des Luftleitelementes an der Fahrzeugtür erforderlich.

Einige Heckspoilereinrichtungen ermöglichen lediglich den Einsatz relativ kurzer Luftleitelemente, wodurch die Verbesserung der Aerodynamik begrenzt ist.

Der Erfindung liegt die Aufgabe zugrunde, eine Heckspoilereinrichtung zu schaffen, die mit relativ geringem Aufwand ausbildbar ist, eine sichere Fahrstellung zur Verbesserung der Aerodynamik ermöglicht und die Funktonalität der Hecktür nicht oder allenfalls gering beeinträchtigt.

Diese Aufgabe wird durch eine Heckspoilereinrichtung nach Anspruch 1 gelöst. Die Unteransprüche beschreiben bevorzugte Weiterbildungen.

Erfindungsgemäß ist das Luftleitelement somit am Scharnier der Hecktür angebracht. Vorteilhafterweise ist es um die Schwenkachse der Hecktür schwenkbar. Hierzu kann das Luftleitelement z.B. eine Lageraufnahme aufweisen, mit der es in einen Lagerbolzen des Scharniers eingehängt wird.

Somit kann das Luftleitelement z.B. mit relativ einfacher Formgebung ausgebildet werden, z.B. als längliche, gebogene Platte, wobei eine Ausbildung aus einer Platte mit z.B. Umbiegen eines Endes zur Ausbildung des Lagerauges möglich ist.

Das Luftleitelement ist durch eine Federeinrichtung in seine Fahrstellung vorgespannt und wird durch Ausbildung eines Anschlages in dieser Fahrstellung gehalten, bei der es um z.B. 75° zur Tür absteht und die Kontur der Seitenwand verlängert, so dass die Aerodynamik des Fahrzeugs verbessert ist. Die Federeinrichtung drückt somit bereits in der Fahrstellung das Luftleitelement, anders als z.B. in der DE 10 2008 036 888 A1, bei der z.B. ein Mitnehmerelement mit Hohlraum das Luftleitelement in dessen Fahrstellung hält, jedoch erst beim Ausklappen der Hecktür gegen die Seitenwand gestaucht wird unter Ausbildung einer Rückstellkraft.

Das Luftleitelement wird gegen einen Gegenanschlag am Scharnier gedrückt, der vorzugsweise an dem türseitig zu befestigenden Scharnierblatt ausgebildet ist, so dass der Gegenanschlag beim Aufklappen der Hecktür mitschwenkt. Somit schwenkt die Hecktür mitsamt dem Luftleitelement in dessen weiterhin abstehenden Stellung auf, bis das Luftleitelement gegen die Außenseite der Seitenwand gelangt. Nachfolgend klappt die Hecktür weiter auf, so dass die Federeinrichtung gegen ihre Federwirkung weiter gespannt wird.

Hierbei ist grundsätzlich ein Umklappen der Hecktür von der geschlossenen Stellung bis zur Anlage an der Außenfläche der Seitenwand, d.h. um etwa 270°, möglich. Die Federeinrichtung kann insbesondere als Metallfeder, z.B. als Drehfeder bzw. Torsionsfeder oder Spiralfeder ausgebildet sein, die anders als z.B. ein mit Hohlraum ausgebildes großvolumigeres Mitnahmeelement die Aufschwenkbewegung der Heckklappe bzw. Hecktür nicht beeinträchtigt.

Somit ergeben sich erfindungsgemäß einige Vorteile. Die Ausbildung des Heckspoilerelementes ist kostengünstig. Es kann z.B. durch lediglich ein kostengünstig ausbildbares Luftleitelement und eine z.B. als Metallfeder ausgebildete Federeinrichtung verwirklicht werden, wobei der Anschlag und Gegenanschlag durch Flächen am Scharnier und Luftleitelement ausgebildet werden können.

Die Funktionalität der Hecktür wird nicht beeinträchtigt. Das Luftleitelement kann grundsätzlich mit größerer Länge ausgebildet sein, da es beim Einschwenken zwischen Tür und Seitenwand aufgenommen wird und nicht störend hervortritt. Der Schwenkraum der Hecktür ist nicht beeinträchtigt.

Die Position des Luftleitelementes in der Fahrstellung ist sicher und fest; falls der Fahrer z. B. versehentlich nach hinten zu dicht einparken sollte, ohne das Luftleitelement zu berücksichtigen, kann das Luftleitelement gegebenenfalls nach innen gegen die Federwirkung einschwenken, ohne beschädigt zu werden.

Erfindungsgemäß wird die Funktion auch bei schlechten Wetterverhältnissen wie z.B. Schnee und Eis nicht beeinträchtigt. Es ergibt sich eine solide mechanische Ausbildung, bei preiswerter Konstruktion, geringem Zusatzgewicht und geringer Teileanzahl.

Statt der Ausbildung eines Gelenkes bzw. einer Anlenkung des Luftleitelementes am Lager des Scharniers kann z.B. auch eine feste Anbindung des Luftleitelementes am Scharnier erfolgen, wobei dann das Luftleitelement vorteilhafterweise sehr elastisch bzw. superelastisch ist, d.h. eine hohe Verformbarkeit ohne Materialbeschädigung oder bleibende Verformung ermöglicht. Somit wird das Luftleitelement beim Aufklappen der Hecktür entsprechend um einen größeren Winkelbereich umgebogen, und verformt sich beim Zurückklappen der Tür zurück. Somit wird die Federeinrichtung durch einen Teil des Luftleitelementes realisiert.

Die Erfindung wird im Folgenden anhand der beiliegenden Zeichnungen an Ausführungsformen näher erläutert. Es zeigen:
- Fig. 1: ein Fahrzeug mit zwei Heckspoilereinrichtungen in Fahrstellung bei geschlossenen Hecktüren gemäß einer Ausführungsform in Aufsicht und perspektivischer Ansicht;
- Fig. 2: den Anbindungsbereich der rechten Hecktür in vergrößerter Darstellung bei geschlossener Heckklappe;
- Fig. 3: eine der Fig. 2 entsprechende Darstellung bei vollständig geöffneter Hecktür;
- Fig. 4: eine Detailvergrößerung des Türscharniers mit der Anbindung des Luftleitelementes.

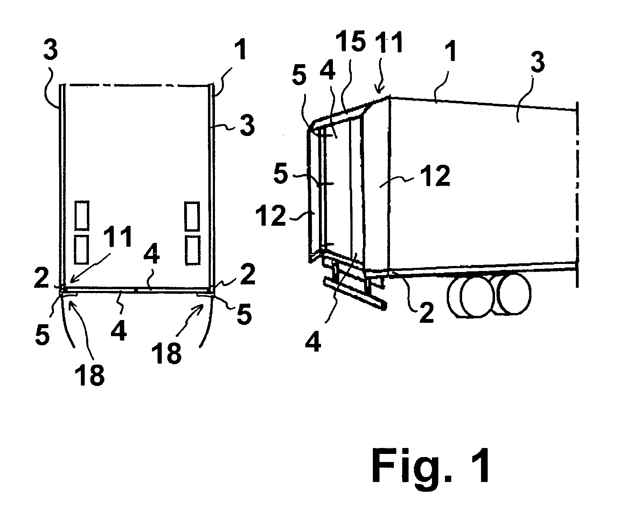

Ein Fahrzeug 1 ist insbesondere ein angetriebenes Nutzfahrzeug oder ein Anhänger und ist mit seinem hinteren Bereich in Fig. 1 in Aufsicht sowie perspektivischer Ansicht gezeigt. Das Fahrzeug 1 weist einen Fahrzeugrahmen 2 auf, der Teil des Aufbaus des Fahrzeugs ist, weiterhin am Fahrzeugrahmen 2 angebrachte Seitenwände 3 und zwei seitlich aufschwenkende Hecktüren 4. Die Seitenwände 3 können aus festem Material sein, wie z.B. bei Kastenwägen, oder auch aus flexiblem oder nachgiebigen Material, wie z.B. Planen. Bei Ausbildung der Seitenwände 3 aus festem Material können diese auch einen Teil des Fahrzeugrahmens 2 darstellen bzw. der Fahrzeugrahmen 2 mit den Seitenwänden 3.

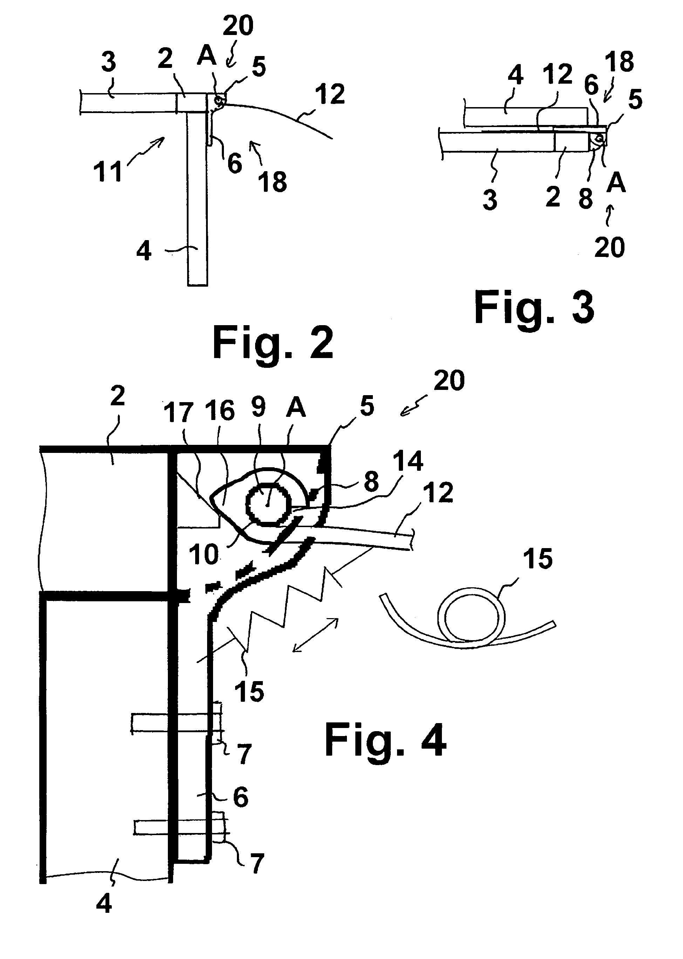

Die Hecktüren 4 sind über Scharniere 5 (Scharniergelenke) am Fahrzeugrahmen 2 oder - bei fester Ausbildung der Seitenwände 3 - auch an den Seitenwänden 3 gelenkig angebracht und vorzugsweise gleich groß. Sie Schwingen jeweils seitlich nach hinten um etwa 270° auf, so dass sie von der geschlossenen Stellung der Fig. 2 in die vollständig geöffnete Stellung der Fig. 3 gelangen und an die Außenseiten der Seitenwände 3 angelehnt werden können.

Jede Hecktür 4 ist vorzugsweise über mehrere vertikal beabstandete Scharniere 5 an dem Fahrzeugrahmen 2 befestigt. Jedes Scharnier 5 weist ein Scharnierblatt 6 auf, das über Befestigungsmittel, z.B. Schrauben 7, an der Hecktür 4 befestigt ist, und einen am Fahrzeugrahmen 2 befestigten, hier gestrichelt gezeigten Sockel 8. Ein Lagerbolzen 9 ist im Sockel 8 aufgenommen oder als Teil des Sockels 8 ausgebildet. Das Scharnierblatt 6 ist mit z.B. einem Lagerauge 10 an dem Lagerbolzen 9 angebunden und somit um eine Schwenkachse A der Hecktür um 270° schwenkbar. Die geschlossene Stellung der Hecktür 4 gemäß Fig. 1, 2 und 4 ist z.B. durch einen Anschlag der Hecktür 4 am Fahrzeugrahmen 2 definiert. Die vollständig geöffnete Stellung der Fig. 3 ist z.B. durch einen Anschlag des Scharnierblattes 5 oder auch der Hecktür 4 an der Seitenwand 3, oder auch einen Anschlag des Scharnierblattes 6 am Fahrzeugrahmen 2 definiert.

Zwei Heckspoilereinrichtungen 18 sind an seitlichen Heckbereichen 11 des Fahrzeugs 1, d.h. links und rechts, angebracht. Sie weisen jeweils ein Luftleitelement 12 aus z.B. Kunststoff wie z.B. Polyethylen oder Polypropylen, oder auch einem Metall auf, das verstellbar an dem Scharnier 5 angebracht ist. Jedes Luftleitelement 12 ist in einer Schwenkachse A schwenkbar aufgenommen. Vorzugsweise kann das Luftleiterelement 12 direkt an den Lagerbolzen 9 mit eingehängt sein, z.B. durch Ausbildung eines Lagerauges 14. Gemäß der gezeigten Ausführungsform ist das Luftleitelement 12 im wesentlichen als gebogene Platte hergestellt, die an einem Ende mit einem offenen Lagerauge 14 ausgebildet ist und z.B. von oben in den Lagerbolzen 9 eingehängt oder auch eingeklipst werden kann. Das Luftleitelement 12 erstreckt sich in der Fahrposition nach hinten, z. B. mit einem Winkel von etwa 75° gegenüber der geschlossenen Hecktür 4, und ist vorteilhafterweise nach innen gekrümmt.

Somit wird durch die beiden Heckspoilerenrichtungen 18 mit den seitlichen Luftleitelementen 12 und z. B. mit einem weiteren, am Dach des Fahrzeugs 1 vorgesehenen Luftleitelement 15 ein Heckspoiler des Fahrzeugs 1 ausgebildet, der die aerody-namischen Eigenschaften verbessert, d.h. den Luftwiderstand verringert. Eine Begrenzung der Länge des Luftleitelementes 12, mit dem dieses sich von der Schwenkachse A nach hinten erstreckt, ist erfindungsgemäß grundsätzlich nicht erforderlich.

Das Luftleitelement 12 wird durch eine Federeinrichtung 15 in seine ausgefahrene Fahrstellung gedrückt, in Fig. 4 somit im Gegenuhrzeigersinn. Die Federeinrichtung 15 drückt das Luftleitelement 12 somit seitlich nach außen, entsprechend der Schwenkbewegung des Öffnens der Hecktür 4 mit gleicher Schwenkachse A. In Fig. 4 ist der Übersichtlichkeit halber die Wirkung der Federeinrichtung 5 entsprechend einer Druckfeder gezeigt; die Federeinrichtung 5 selbst kann z. B. wie rechts gezeigt als metallische Drehfeder bzw. Torsionsfeder ausgebildet sein, die z. B. in den Lagerbolzen 9 eingehängt ist und sich mit ihren Schenkeln an dem Luftleitelement 12 und dem Scharnierblatt 6 abstützt. Grundsätzlich kann die Federeinrichtung 15 auch Teil des Luftleitelementes 12 sein, in dem dieses selbst elastisch verformt ist und dies Federspannung ausgebildet.

An dem Luftleiterelement 12 ist ein Anschlag 16 ausgebildet, der an einen Gegenanschlag 17 des Scharniers 5, vorzugsweise des an der Hecktür 4 befestigen Scharnierblattes 6, ausgebildet ist. Die Federeinrichtung 15 drückt das Luftleitelement 12 somit in die geöffnete Stellung bzw. ausgefahrene Fahrstellung, in der sein Anschlag 16 am scharnierseitigen Gegenanschlag 17 anliegt.

Beim Öffnen der Hecktür 4, d.h. die in den Figuren 2 bis 4 im Gegenuhrzeigersinn schwenkt, schwenkt mit dem Scharnierblatt 6 auch dessen Gegenanschlag 17 sowie die scharnierblattseitige Anbindung der Federeinrichtung 15, so dass das gesamte Luftleitelement 12 mit dem Scharnierblatt 6 schwenkt, bis das Luftleitelement 12 gegen die Außenwand 3 gelangt. Da das Luftleitelement 12 etwa 75° (bzw. aufgrund seines gekrümmten Verlaufs zum Teil auch etwas weniger) von der Türwand 4 absteht, gelangt das Luftleitelement 12 vor der Hecktür 4 gegen die Außenseite der Seitenwand 3. Beim nachfolgend verbleibenden Schwenkwinkel wird das Luftleitelement 12 gegen die Wirkung der Federeinrichtung 15 gegen das Scharnierblatt 6 bzw. die weiter aufschwingende Hecktür 4 gedrückt. Somit gibt die Federeinrichtung 15 nach, ohne dass Beschädigungen an dem Luftleitelement 12 oder dem Scharnier 6 bzw. der Hecktür 4 auftreten.

Beim nachfolgenden Schließen der Hecktür 4 entspannt sich die Federeinrichtung 15 wieder, so dass wiederum die Fahrstellung der Fig. 1, 2 und 4 erreicht wird.

Die Heckspoilereinrichtung 19 bildet mit dem Scharnier 5 eine Scharniereinrichtung 20.

## Patentansprüche

1. Heckspoilereinrichtung (18) für ein Fahrzeug (1) mit mindestens einer Hecktür (4),
wobei die Heckspoilereinrichtung (18) ein Luftleitelement (12) zur Anbringung an einem seitlichen Heckbereich (11) eines Fahrzeugs (1) aufweist:
wobei das Luftleitelement (12) zwischen einer Fahrstellung zur Konturverlängerung und aerodynamischen Luftleitung bei geschlossener Hecktür und einer eingeklappten Stellung bei geöffneter Hecktür schwenkbar ist,
wobei
das Luftleitelement (12) in einem Scharnier (6) der Hecktür (4) aufnehmbar ist, und **dadurch gekennzeichnet, dass**
die Heckspoilereinrichtung (18) eine Federeinrichtung (15) aufweist, die das Luftleitelement (12) in dessen Fahrstellung gegen einen am Scharnier (5) ausgebildeten Gegenanschlag (17) drückt, wobei das Luftleitelement (12) eine Lageraufnahme (14) zur schwenkbaren Lagerung in einem die Schwenkachse (A) des Scharniers ausbildenden Lagerbolzen (9) des Scharniers (5) aufweist, wobei die Federeinrichtung (15) als Drehfeder zur Lagerung im Lagerbolzen (9) des Scharniers (5) ausgebildet ist.

2. Heckspoilereinrichtung (18) nach Anspruch 1, **dadurch gekennzeichnet, dass** die Federeinrichtung (15) eine zwischen dem Luftleitelement (12) und dem Scharnier (5) vorgesehene Metallfeder ist.

3. Heckspoilereinrichtung (18) nach einem der vorherigen Ansprüche, **dadurch gekennzeichnet, dass** das Luftleitelement (12) einen Anschlag (16) zur federvorgespannten Anlage am Gegenanschlag (17) des Scharniers (5), vorzugsweise eines Scharnierblattes (6) des Scharniers (5), aufweist.

4. Heckspoilereinrichtung (18) nach einem der vorherigen Ansprüche, **dadurch gekennzeichnet, dass** die Federeinrichtung (15) in sämtlichen Stellungen des Luftleitelementes (12) gespannt ist und in der eingeklappten Stellung des Luftleitelementes (12) stärker als in der Fahrstellung des Luftleitelementes (12) gespannt ist.

5. Heckspoilereinrichtung (18) nach einem der vorherigen Ansprüche, **dadurch gekennzeichnet, dass** das Luftleitelement (12) aus einem festen Material, z. B. Kunststoff oder Metall, ausgebildet ist.

6. Heckspoilereinrichtung (18) nach einem der vorherigen Ansprüche, **dadurch gekennzeichnet, dass** das Luftleitelement (12) als gebogene Platte, z.B. mit offenem Lagerauge (14), ausgebildet ist.

7. Scharniereinrichtung (20), die aufweist:
ein Scharnier (5), das ein an der Hecktür (4) zu befestigendes Scharnierblatt (6) und einen am Fahrzeug (1), z.B. einem Fahrzeugrahmen (2) oder einer Seitenwand (3) des Fahrzeugs(1), zu befestigenden Sockel (8) aufweist, wobei das Scharnierblatt (6) gegenüber dem Sockel (8) um eine Schwenkachse (A) um etwa 270° schwenkbar ist von einer geschlossenen Stellung der Hecktür (4) in eine geöffnete Stellung der Hecktür (4) zur Anlage an einer Seitenwand (3) des Fahrzeugs (1), und
eine Heckspoilereinrichtung (18) nach einem der vorherigen Ansprüche, deren Luftleitelement (12) in der Schwenkachse (A) schwenkbar aufgenommen ist und deren Federeinrichtung (15) zwischen dem Luftleitelement (12) und dem Scharnier (5) aufgenommen ist und das Luftleitelement (12) in der geschlossenen Stellung der Hecktür (4) gegen einen Gegenanschlag (17) des Scharniers (5) drückt.

8. Scharniereinrichtung (20) nach Anspruch 7, **dadurch gekennzeichnet, dass** das Scharnier (5) einen am Fahrzeug (1) anzubringenden Sockel (8) und ein an einer Hecktür (4) anzubringendes Scharnierblatt (6) aufweist,
wobei das Scharnierblatt (6) gegenüber dem Sockel (8) in einer Schwenkachse (A) schwenkbar ist, und
wobei das Luftleitelement (12) in der Schwenkachse (A) gegenüber sowohl dem Sockel (8) als auch dem Scharnierblatt (6) schwenkbar gelagert ist.

9. Scharniereinrichtung (20) nach Anspruch 8, **dadurch gekennzeichnet, dass** am Sockel (8) ein Lagerbolzen (9) ausgebildet ist, in dem sowohl das Scharnierblatt (6) als auch das Luftleitelement (12) schwenkbar aufgenommen sind.

10. Scharniereinrichtung (20) nach Anspruch 8 oder 9, **dadurch gekennzeichnet, dass** die Federeinrichtung zwischen dem Scharnierblatt (6) und dem Luftleitelement (12) gespannt ist.

11. Scharniereinrichtung (20) nach Anspruch 10, **dadurch gekennzeichnet, dass** das Luftleitelement (12) in sämtlichen Stellungen des Scharnierblattes (6) durch die Federeinrichtung (15) gegen ein am Scharnierblatt (6) ausgebildetes Gegenlager (17) gedrückt wird.

12. Fahrzeug (1) mit zwei seitlich um etwa 270° Grad aufschwenkbaren Hecktüren (4), die zwischen einer geschlossener Stellung und einer geöffneten Stellung zur Anlage an Seitenwänden (3) des Fahrzeugs (1) schwenkbar sind,
wobei jede Hecktür (4) durch jeweils eine Scharniereinrichtung (20) nach einem der Ansprüche 9 bis 13 gelenkig angebunden ist,
und wobei die beiden Luftleitelemente (12) in einer Fahrstellung bei geschlossenen Hecktüren (4) zur Konturverlängerung und aerodynamischen Luftleitung nach hinten abstehen.

## Claims

1. Rear spoiler device (18) for a vehicle (1) having at least one rear door (4),
wherein the rear spoiler device (18) has an air guiding element (12) for fitting to a lateral rear region (11) of a vehicle (1):
wherein the air guiding element (12) can be pivoted between a travel position for contour extension and aerodynamic air guiding when the rear door is closed and a folded-in position when the rear door is open,
wherein
the air guiding element (12) can be received in a hinge (6) of the rear door (4), and **characterized in that** the rear spoiler device (18) has a resilient device (15) which presses the air guiding element (12) in the travel position thereof against a counter-stop (17) which is formed on the hinge (5), wherein the air guiding element (12) has a bearing receiving member (14) for pivotable bearing in a bearing pin (9) of the hinge (5), which pin (9) forms the pivot axis (A) of the hinge (5), wherein the resilient device (15) is constructed as a rotary spring for bearing in the bearing pin (9) of the hinge (5).

2. Rear spoiler device (18) according to Claim 1, **characterized in that** the resilient device (15) is a metal spring which is provided between the air guiding element (12) and the hinge (5).

3. Rear spoiler device (18) according to any one of the preceding claims, **characterized in that** the air guiding element (12) has a stop (16) for resiliently pretensioned abutment on the counter-stop (17) of the hinge (5), preferably a hinge plate (6) of the hinge (5).

4. Rear spoiler device (18) according to any one of the preceding claims, **characterized in that** the resilient device (15) is tensioned in all the positions of the air guiding element (12) and is tensioned in the folded-in position of the air guiding element (12) to a greater extent than in the travel position of the air guiding element (12).

5. Rear spoiler device (18) according to any one of the preceding claims, **characterized in that** the air guiding element (12) is formed from a solid material, for example, plastics material or metal.

6. Rear spoiler device (18) according to any one of the preceding claims, **characterized in that** the air guiding element (12) is constructed as a bent plate, for example, having an open bearing lug (14).

7. Hinge device (20) which has:
a hinge (5) which has a hinge plate (6) which is intended to be secured to the rear door (4) and a base (8) which is intended to be secured to the vehicle (1), for example, a vehicle frame (2) or a side wall (3) of the vehicle (1), wherein the hinge plate (6) is able to be pivoted through approximately 270° with respect to the base (8) about a pivot axis (A), from a closed position of the rear door (4) into an open position of the rear door (4) for abutment with a side wall (3) of the vehicle (1), and
a rear spoiler device (18) according to any one of the preceding claims, the air guiding element (12) of which is pivotably received in the pivot axis (A) and the resilient device (15) of which is received between the air guiding element (12) and the hinge (5) and the air guiding element (12) in the closed position of the rear door (4) presses against a counter-stop (17) of the hinge (5).

8. Hinge device (20) according to Claim 7, **characterized in that** the hinge (5) has a base (8) which is intended to be fitted to the vehicle (1) and a hinge plate (6) which is intended to be fitted to a rear door (4), wherein the hinge plate (6) can be pivoted in a pivot axis (A) relative to the base (8) and
wherein the air guiding element (12) is pivotably supported in the pivot axis (A) with respect to both the base (8) and the hinge plate (6).

9. Hinge device (20) according to Claim 8, **characterized in that** there is formed on the base (8) a bearing pin (9) in which both the hinge plate (6) and the air guiding element (12) are pivotably received.

10. Hinge device (20) according to claim 8 or 9, **characterized in that** the resilient device is tensioned between the hinge plate (6) and the air guiding element (12).

11. Hinge device (20) according to Claim 10, **characterized in that** the air guiding element (12) in all the positions of the hinge plate (6) is pressed by the resilient device (15) against a counter-bearing (17) which is formed on the hinge plate (6).

12. Vehicle (1) having two rear doors (4) which can be pivoted open laterally through approximately 270° and which can be pivoted between a closed position and an open position for abutment with side walls (3) of the vehicle (1), wherein each rear door (4) is connected in an articulated manner by means of a hinge device (20), respectively, according to any one of Claims 9 to 13, and wherein the two air guiding elements (12) in a travel position with the rear doors (4) closed protrude toward the rear for contour extension and aerodynamic air guiding.

## Revendications

1. Système de spoiler arrière (18) pour un véhicule (1) avec au moins une porte arrière (4),
dans lequel le système de spoiler arrière (18) présente un élément de guidage d'air (12) à installer à une région latérale arrière (11) d'un véhicule (1),
dans lequel l'élément de guidage d'air (12) peut pivoter entre une position de roulage pour le prolongement du contour et le guidage aérodynamique de l'air avec la porte arrière fermée et une position rabattue lorsque la porte arrière est ouverte,
dans lequel l'élément de guidage d'air (12) peut être monté dans une charnière (6) de la porte arrière (4),
et **caractérisé en ce que** le système de spoiler arrière (18) présente un système de ressort (15), qui pousse l'élément de guidage d'air (12) dans sa position de roulage contre une contrebutée (17) formée sur la charnière (5), dans lequel l'élément de guidage d'air (12) présente un logement de palier (14) pour le support pivotant dans un axe de palier (9) de la charnière (5) formant l'axe de pivotement (A) de la charnière, dans lequel le système de ressort (15) est configuré en ressort à branches pour le support dans l'axe de palier (9) de la charnière (5).

2. Système de spoiler arrière (18) selon la revendication 1, **caractérisé en ce que** le système de ressort (15) est un ressort métallique prévu entre l'élément de guidage d'air (12) et la charnière (5).

3. Système de spoiler arrière (18) selon l'une quelconque des revendications précédentes, **caractérisé en ce que** l'élément de guidage d'air (12) présente une butée (16) pour l'appui précontraint par ressort sur la contrebutée (17) de la charnière (5), de préférence d'une platine de charnière (6) de la charnière (5).

4. Système de spoiler arrière (18) selon l'une quelconque des revendications précédentes, **caractérisé en ce que** le système de ressort (15) est tendu dans toutes les positions de l'élément de guidage d'air (12) et il est tendu plus fortement dans la position rabattue de l'élément de guidage d'air (12) que dans la position de roulage de l'élément de guidage d'air (12).

5. Système de spoiler arrière (18) selon l'une quelconque des revendications précédentes, **caractérisé en ce que** l'élément de guidage d'air (12) est réalisé en un matériau solide, par exemple en matière plastique ou en métal.

6. Système de spoiler arrière (18) selon l'une quelconque des revendications précédentes, **caractérisé en ce que** l'élément de guidage d'air (12) est réalisé en forme de plaque courbe, par exemple avec un noeud ouvert (14).

7. Système de charnière (20), qui présente:
une charnière (5), qui présente une platine de charnière (6) à fixer à la porte arrière (4) et un socle (8) à fixer à un véhicule (1), par exemple à un châssis de véhicule (2) ou à une paroi latérale (3) du véhicule (1), dans lequel la platine de charnière (6) peut pivoter d'environ 270° par rapport au socle (8) autour d'un axe de pivotement (A) depuis une position fermée de la porte arrière (4) jusqu'à une position ouverte de la porte arrière (4) pour l'appui sur une paroi latérale (3) du véhicule (1), et
un système de spoiler arrière (18) selon l'une quelconque des revendications précédentes, dont l'élément de guidage d'air (12) est logé de façon pivotante dans l'axe de pivotement (A) et dont le système de ressort (15) est placé entre l'élément de guidage d'air (12) et la charnière (5) et pousse l'élément de guidage d'air (12) dans la position fermée de la porte arrière (4) contre une contrebutée (17) de la charnière (5).

8. Système de charnière (20) selon la revendication 7, **caractérisé en ce que** la charnière (5) présente un socle (8) à installer sur le véhicule (1) et une platine de charnière (6) à installer sur une porte arrière (4), dans lequel la platine de charnière (6) peut pivoter par rapport au socle (8) autour d'un axe de pivotement (A), et dans lequel l'élément de guidage d'air (12) est monté de façon pivotante autour de l'axe de pivotement (A) aussi bien par rapport au socle (8) que par rapport à la platine de charnière (6).

9. Système de charnière (20) selon la revendication 8, **caractérisé en ce qu'**un axe de palier (9) est formé sur le socle (8), sur lequel aussi bien la platine de charnière (6) que l'élément de guidage d'air (12) sont montés de façon pivotante.

10. Système de charnière (20) selon la revendication 8 ou 9, **caractérisé en ce que** le système de ressort est tendu entre la platine de charnière (6) et l'élément de guidage d'air (12).

11. Système de charnière (20) selon la revendication 10, **caractérisé en ce que** l'élément de guidage d'air (12) est poussé contre une contrebutée (17) formée sur la platine de charnière (6) par le système de ressort (15) dans toutes les positions de la platine de charnière (6).

12. Véhicule (1) avec deux portes arrière (4) pouvant s'ouvrir latéralement par pivotement d'environ 270°, qui peuvent pivoter entre une position fermée et une position ouverte pour l'appui contre des parois latérales (3) du véhicule (1), dans lequel chaque porte arrière (4) est assemblée de façon articulée au moyen d'un système de charnière (20) selon l'une quelconque des revendications 9 à 13, et dans lequel les deux éléments de guidage d'air (12) sont saillants vers l'arrière, dans une position de roulage avec les portes arrière fermées (4), pour le prolongement du contour et le guidage aérodynamique de l'air.
